# EUROPEAN PATENT APPLICATION

(11) **EP 1 273 218 A1**
(43) Date of publication of application: **08.01.2003**
(21) Application number: 02077270.3
(22) Date of filing: 11.06.2002
(51) Int. Cl.: A01B 71/06, A01B 51/04

(54) **Agricultural machine**

(30) Priority: 03.07.2001 EP 01202542
(71) Applicant: Lely Enterprises AG, 6300 ZUG (CH)
(72) Inventor: Arnold, Martin, 38275 Steinlah (DE)
(74) Representative: Corten, Maurice Jean F.M.

(57) **Abstract**

The invention relates to an agricultural machine (1) couplable to a tractor (3) and drivable from the tractor (3) and having at least one consumer (10, 12) supplied with electrical energy. In order to ensure operational reliability of the electrical consumers (10, 12) of the agricultural machine (1) despite increasing demands, it is proposed according to the invention that, for power supply, the agricultural machine (1) comprises its own on-board electrical system (17) having at least one energy generator (13) and/or energy storage mechanism (15) of its own.

## Description

The invention relates to an agricultural machine couplable to a tractor and drivable from the tractor and having at least one consumer supplied with electrical energy.

The extent to which electronics are used in agricultural machinery is increasing markedly. Even now, balers may have up to twenty consumers to be supplied, for example. Examples of consumers are open-loop control, closed-loop control and/or operating devices, which are in active connection with sensors and actuators and serve in density control, or servomotors for movement sequences, such as for example binding in the case of round balers or electrically driven fans for cleaning the twine knotters in the case of square balers.

Electronic energy supply has hitherto been effected from the tractor, by connecting supply leads to the 12 volt tractor battery or to the 25 amp continuous current socket outlet of the tractor.

This is disadvantageous, on the one hand due to the voltage drop resulting from numerous, long connecting leads between the tractor and the consumers of the agricultural machine. On the other hand, however, the simultaneous actuation of a plurality of current consumers on the tractor leads to problems in the operation of the consumers on the agricultural machine (too slow) or indeed to complete non-operation thereof. Moreover, the simultaneous operation of a plurality of consumers on the agricultural machine overloads the tractor power source, thereby causing the fuses to blow. Open-/closed-loop control devices comprise their own regulators, which take account of a voltage drop and adjust the voltage down to 8 volts for example, i.e. the open- and closed-loop control devices operate smoothly even at this voltage. Matters could be improved with thicker lead cross sections, but the tractor leads designed for 25 A continuous current would still lead to a considerable voltage drop.

In future, consumers on agricultural machines, in particular balers, which are currently mechanically or hydraulically actuated will be replaced by electrical consumers.

The object of the invention is to ensure the operational reliability of electrical consumers on an agricultural machine connected to a tractor despite increasing demands.

This object is achieved according to the invention in that, for power supply, the agricultural machine comprises its own on-board electrical system having at least one energy generator and/or energy storage mechanism of its own.

In this way, the following advantages are achieved:
- consumer-related design of current intensity, lead cross sections and fuses, independent of tractor electrical system,
- relatively high number of consumers possible,
- reliable simultaneous operation of a plurality of consumers without impact on or caused by the tractor,
- minimal connecting lead lengths,
- no voltage drops or malfunctioning due to tractor socket outlet,
- operation also possible with tractors which use 24 or 42 volt installations, for example,
- tractor connection configuration has no impact on the agricultural machine. Since some tractor manufacturers (England) connect the positive lead to ground, it is necessary in this case to isolate the entire electrical system from the chassis (ground), which is complex.
- since the on-board electrical system also comprises an energy storage mechanism, control processes may also be performed when the working components are at a standstill,
- low energy consumers may also be supplied solely by a battery on the agricultural machine.

Further features and advantages of the invention are revealed by the remaining subclaims and by the following description of a preferred exemplary embodiment, with reference to the drawings, in which:
- Fig. 1: shows a tractor/round baler combination with its own power supply according to the invention and
- Fig. 2: shows the circuit diagram of an on-board electrical system for the round baler according to Fig. 1, with a low power operating/control device and a higher power binding drive motor.

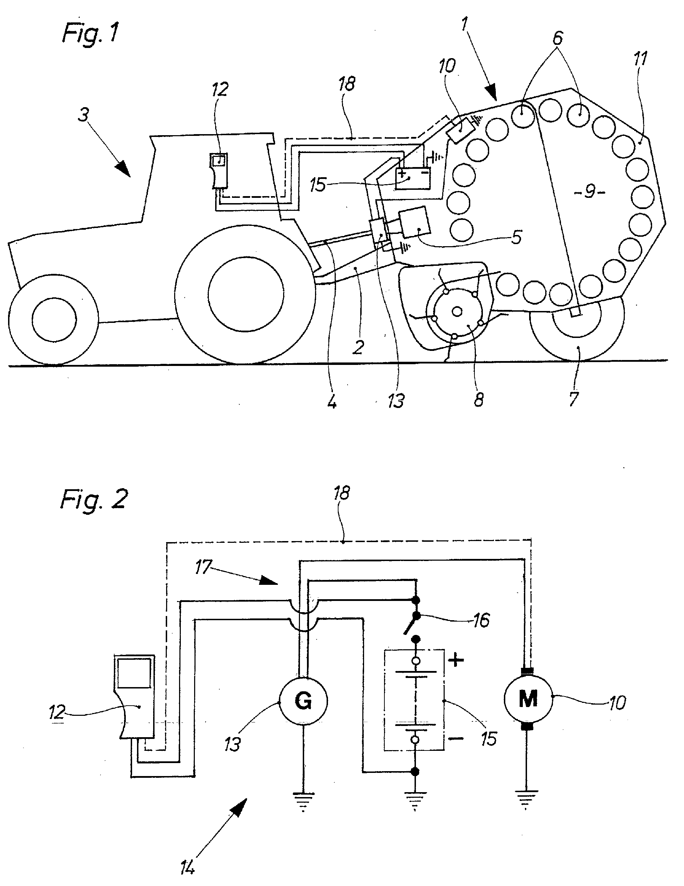

The round baler 1 shown in Figure 1 as a representative agricultural machine is mobile and is connected to a tractor 3 by a drawbar 2. The tractor 3 pulls the round baler 1 and provides the energy required for the functional components, i.e. for example torque from a power take-off shaft on the tractor 3 via a cardan shaft 4 and a main transmission 5 to baling rollers 6 and hydraulic pressure from a hydraulic tractor pump via hydraulic lines.

The round baler 1 is mounted on a running gear 7 and has at its front end, in the direction of travel, a height-adjustable pick-up device 8, which conveys the stalk material picked up from the ground into a baling chamber 9, in which the baling members 6 form a bale (not shown). The compressed bale is tied up by means of a binding device, of which only an electric motor 10 is shown. After tying up, the finished bale is ejected to the rear when a tailgate 11 is opened.

The novel feature is that the electrical energy for the consumers, e.g. control and/or operating device 12 and electric motor 10, on the round baler 1 is no longer provided via the tractor electrical system, but rather by a separate three-phase current generator 13 arranged on the round baler 1, which generator is arranged upstream of the main transmission 5 of the round baler 1 and is driven mechanically from the tractor 3 via the cardan shaft 4. The fixed three-phase current generator 13 is connected to the input shaft of the main transmission 5 for example via a belt drive, not shown, with gearing.

Figure 2 shows an example of an on-board electrical system 14 of the round baler 1. It consists of a three-phase current generator 13, a battery 15, a battery master switch 16 in the form of an emergency stop safety switch, the control and/or operating device 12 in the form of a low-power consumer and the electric motor 10 for driving the binding device together with cabling 17, wherein the negative lead is connected to the baler housing (ground) in conventional manner. The electric motor 10 is connected directly to the battery 15, while the control and/or operating device 12 is connected to the battery 15. A CAN bus line 18 from the control and operating device 12 serves to control the movement sequences of the electric motor 10.

The mode of operation of the round baler 1 according to the invention is as follows:

During operation, the power take-off shaft of the tractor 3 drives the cardan shaft 4 and thus the three-phase current generator 13. By appropriate actuation of the battery master switch 16 and the operating and control device 12, the switched-on consumer 10, 12 is supplied with current via the on-board electrical system 14 of the baler 1 when the electrical circuit is closed. As hitherto, the lighting system of the round baler 1 prescribed by the motor vehicle safety standards obtains its energy supply and signals from the tractor 3.

Instead of the round baler, combinations of round balers and devices for wrapping the bale with film or indeed square balers or fertiliser spreaders, mowing mechanisms, self-loading forage boxes and other agricultural machines may also be equipped according to the invention with their own electrical energy supplies. In the case of agricultural machines whose consumers, e.g. an open- and/or closed-loop control device, consume only small amounts of power, it may even be sufficient merely to use an energy storage mechanism, which supplies energy for at least 24 hours. Alternatively, it may also be expedient to connect only the high-power consumers to the agricultural machine's own energy supply installation and to operate the low-power consumers from the tractor electrical system.

## Claims

1. An agricultural machine (1) couplable to a tractor (3) and drivable from the tractor (3) and having at least one consumer (10, 12) supplied with electrical energy, **characterised in that,** for power supply, the agricultural machine (1) comprises its own on-board electrical system (17) having at least one energy generator (13) and/or energy storage mechanism (15) of its own.

2. An agricultural machine according to claim 1, **characterised in that** the energy generator (13) is driven directly or indirectly by a main drive shaft (4) of the agricultural machine (1).

3. An agricultural machine according to claim 2, **characterised in that** gearing is provided between main drive shaft (4) and energy generator (13).

4. An agricultural machine according to claim 2 or claim 3, **characterised in that** the energy generator (13) is driven by an input shaft of the main transmission (5) of the agricultural machine (1).

5. An agricultural machine according to claim 4, **characterised in that** the energy generator (13) is driven by a belt drive.

6. An agricultural machine according to one or more of the preceding claims, **characterised in that** the energy generator (13) is a three-phase current generator.

7. An agricultural machine according to one or more of the preceding claims, **characterised in that** the energy storage mechanism (15) is a battery arranged fixedly on the agricultural machine (1), wherein between generator (13), battery (15) and consumers (10, 12) there is provided cabling (17) with at least one emergency stop switch (16), which, as a safety element, interrupts current supply to all the consumers.

8. An agricultural machine according to one or more of the preceding claims, **characterised in that** the agricultural machine is a baler (1), which may be combined with a means for wrapping the ejected bale in film.

9. An agricultural machine according to one or more of the preceding claims, **characterised in that** the lighting system of the agricultural machine (1) is supplied with energy and operated by the electrical system of the tractor (3).

10. An agricultural machine according to claim 1, **characterised by** electrical consumers, which may be operated solely by an energy storage mechanism.
